# NEUE EUROPÄISCHE PATENTSCHRIFT

(11) **EP 1 720 737 B2**
(45) Veröffentlichungstag und Bekanntmachung des Hinweises auf die Entscheidung über den Einspruch: **20.03.2013**
(45) Hinweis auf die Patenterteilung: 19.03.2008
(21) Anmeldenummer: 05707757.0
(22) Anmeldetag: 10.01.2005
(51) Int. Cl.: B60R 21/017

(54) **VORRICHTUNG ZUR BESTROMUNG WENIGSTENS EINER ZÜNDENDSTUFE MITTELS EINES ZÜNDSTROMS AUS EINER ENERGIERESERVE**
DEVICE FOR SUPPLYING AT LEAST ONE IGNITION POWER MODULE WITH CURRENT BY MEANS OF AN IGNITION CURRENT SUPPLIED FROM AN ENERGY RESERVE
DISPOSITIF POUR L'ALIMENTATION EN COURANT D'AU MOINS UN ETAGE FINAL D'AMORCAGE AU MOYEN D'UN COURANT D'AMORCAGE ISSU D'UNE RESERVE D'ENERGIE

(30) Priorität: 27.02.2004 DE 102004010135
(43) Veröffentlichungstag der Anmeldung: 15.11.2006
(73) Patentinhaber: ROBERT BOSCH GMBH, 70442 Stuttgart (DE)
(72) Erfinder: SCHUMACHER, Hartmut, 71691 Freiberg (DE); ROOS, Bernd, 74223 Flein (DE); KARNER, Ruediger, 70806 Kornwestheim (DE); JOUSSE, Alain, 70192 Stuttgart (DE)
(86) Internationale Anmeldenummer: PCT/EP2005/050079
(87) Internationale Veröffentlichungsnummer: WO 2005/082679

(56) Entgegenhaltungen:
- EP-A1- 0 813 999
- EP-B1- 0 883 527
- DE-A1- 3 921 305
- DE-A1- 10 057 917
- DE-A1- 19 748 311
- DE-C1- 19 826 704
- DE-T2- 3 876 454
- DE-T2- 69 101 169
- US-A- 5 420 790
- US-A- 5 459 449
- BELAU H: "ZUENDKONDENSATOR ENTLADESCHALTUNG FUER AIRBAGSYSTEME" SIEMENS TECHNIK REPORT, SIEMENS AG.,ERLANGEN, DE, Bd. 3, Nr. 8, Juli 2000 (2000-07), Seite 17, XP000936317 ISSN: 1436-7777

## Beschreibung

### Stand der Technik

Die Erfindung geht aus von einer Vorrichtung zur Bestromung wenigstens einer Zündendstufe mittels eines Zündstroms aus einer Energiereserve nach der Gattung des unabhängigen Patentanspruchs, wie sie aus der DE 198 26 704 bekannt ist.

Aus US 5,420,790 A ist es bekannt, einen Spannungsregler für den Mikroprozessor und den Beschleunigungssensor vorzusehen, der die Spannung für diese Bauelemente auf 5V hält. Die Energie kann dabei entweder aus der Autobatterie oder einer Energiereserve stammen.

Aus DE 100 57 917 A1, als nächstliegender Stand der Technik betrachtet, ist es bereits bekannt, Zündendstufen im Auslösefall mit einem Zündstrom aus einer Energiereserve zu bestromen. Damit können dann die Zündelemente mittels dieses Zündstroms gezündet werden. Die Energiereserve ist üblicherweise ein oder mehrere Kondensatoren, vorzugsweise Elektrolytkondensatoren.

### Vorteile der Erfindung

Die erfindungsgemäße Vorrichtung zur Bestromung wenigstens einer Zündendstufe mittels eines Zündstroms aus einer Energiereserve mit den Merkmalen des unabhängigen Patentanspruchs hat demgegenüber den Vorteil, dass nunmehr zwischen der Energiereserve und der Zündendstufe ein Spannungsregler vorgesehen ist, der die Spannung an der Zündendstufe auf einen vorgegebenen Wert einstellt. Um die Verlustleistung zu minimieren, wird der Spannungsregler diesen Wert auf einen minimal möglichen Wert einstellen. In einem Autarkiebetrieb, also bei einem Abriss der Batteriespannung, verbraucht das Steuergerät selbst Strom aus der Energiereserve, der einen Spannungsabfall an der Energiereserve hervorruft. Zusätzlich, damit ein Steuergerät in einem Autarkiefall während einer Zündung der Zündendstufe fehlerfrei weiter arbeitet, wird zur Kompensation des Spannungsabfalls am Innenwiderstand des Energiereservenkondensators eine wesentlich höhere Energiereservespannung aufgebaut als notwendig wäre. Diese höhere Spannung hat jedoch zur Folge, dass auch die Zündendstufen für eine höhere Verlustleistung dimensioniert werden müssten. Durch Einfügen des erfindungsgemäßen Spannungsreglers zwischen der Energiereserve und der Zündendstufe wird die Spannung an der Zündendstufe immer auf den niedrigst benötigten Wert gehalten. Im Autarkiefall ohne Zündung ist der Spannungsregler hochohmiger, da nur sehr wenig Strom vom Steuergerät aufgenommen wird. Kommt es zur Zündung und der Freigabe der Zündendstufen und damit zu einem Stromfluss des Zündstroms, wird der Innenwiderstand geringer, so dass der benötigte Zündstrom zur Verfügung steht. Folglich ist es möglich, dass die Zündendstufen für eine geringere Verlustleistung als bisher möglich dimensioniert werden können. Damit werden die Zündendstufen kleiner, also günstiger in der Herstellung.

Durch die in den abhängigen Ansprüchen aufgeführten Maßnahmen und Weiterbildungen sind vorteilhafte Verbesserungen der im unabhängigen Patentanspruch angegeben Vorrichtung zur Bestromung wenigstens einer Zündendstufe mittels eines Zündstroms und einer Energiereserve möglich.

Besonders vorteilhaft ist, dass ein abschaltbarer Spannungsregler auch die Funktion eines Sicherheitshalbleiters darstellt, wobei der Sicherheitshalbleiter die Bestromung der wenigstens einen Zündendstufe ermöglicht (Sicherheitshalbleiter ein) oder nicht (Sicherheitshalbleiter aus). Der Sicherheitshalbleiter ist ein separates Bauelement unabhängig von den Zündendstufen, um bei einer Fehlfunktion (inklusive einer Zerstörung) der Zündendstufen und damit einer möglichen Fehlauslösung dieser erfolgreich entgegenzuwirken. Der Sicherheitshalbleiter ist, wie seine Bezeichnung bereits aussagt, elektronisch realisiert.

Zusätzlich kann auch eine Diagnose für den Sicherheitshalbleiter vorgesehen sein. Die Diagnose könnte beispielsweise eine einschaltbarere Widerstandslast nach Masse sein, wobei der Widerstand eine Zündung simuliert. Bei durchgeschaltetem Diagnosewiderstand hängt die Spannung an der Zündendstufe vom Sicherheitshalbleiter-Zustand ab : Ist der Sicherheitshalbleiter durchgeschaltet, wird die Spannung an der Zündendstufe hoch, ist der Sicherheitshalbleiter aus, wird die Spannung niedrig.

Darüber hinaus weist der Sicherheitshalbleiter wenigstens einen MOSFET-Leistungstransistor auf.

Falls ein N-Kanal MOSFET-Transistor verwendet ist, kann eine zusätzliche Gate-Versorgung mit Diode und Kondensator vorteilhaft sein. Dieser Eingang stellt eine gedämpfte Energiereserve-Spannung dar, so dass während eines Energiereserve-Spannungsabfalls eine höhere Spannung für die Gate-Ansteuerung des Leistungstransistors zur Verfügung steht. Damit kann bei einem Abfall der Energiereserve bis zu einer Spannung kleiner als die geregelte Spannung (Durchschalten des Leistungstransistor) ein geringerer Innenwiderstand (R_{DS(ON)}) des Transistors erreicht werden.

Weiterhin kann es vorteilhaft sein, dass dem Spannungsregler wenigstens eine Stromquelle beispielsweise zur Diagnose der wenigstens einen Zündendstufe zugeordnet ist. Diese Stromquelle verursacht eine Diagnose der Zündendstufe, indem die Stromquelle einen Strom bereitstellt, der geringer ist, als ein Strom, der zur Auslösung der Zündelemente notwendig ist, aber dennoch in dem Diagnosekondensator (Kondensator zwischen Sicherheitshalbleiter und Zündendstufe) genügend Energie für die Endstufendiagnose hervorrufen wird. Insbesondere können damit Alterungsprozesse erkannt werden. Die Stromquelle könnte beispielsweise in Form eines regulierten Transistors, der den Spannungsregler überbrückt, oder einer umschaltbaren Stromregelung direkt am Spannungsregler realisiert werden.

Weiterhin ist zwischen der Energiereserve und dem Spannungsregler eine Verpolschutzdiode vorgesehen die die Aufgabe hat, bei einem falschen Anschluss der Energiereserve, also mit dem falschen Pol, einen Schutz vor der Spannung der Energiereserve bietet, in dem sich diesen falsch angeordneten Kondensator dann abblockt. Die Verpolschutzdiode, die Stromquelle, der Sicherheitshalbleiter und der Spannungsregler können alle in einem ASIC lokalisiert sein. Es ist jedoch auch möglich, diese Funktionen in zwei oder drei Halbleiterprozesse aufzuteilen. Beispielsweise könnten in einem ersten ASIC der Sicherheitshalbleiter mit dem Spannungsregler und die Verpolschutzdiode lokalisiert sein und in einem zweiten ASIC die Stromquelle zur Diagnose, die Diagnosefunktion für den Sicherheitshalbleiter und einer Ansteuerung für den Sicherheitshalbleiter angeordnet sein. Weitere Aufteilungen sind möglich.

### Zeichnung

Ein Ausführungsbeispiel der Erfindung ist in der Zeichnung dargestellt und wird in der nachfolgenden Beschreibung näher erläutert.

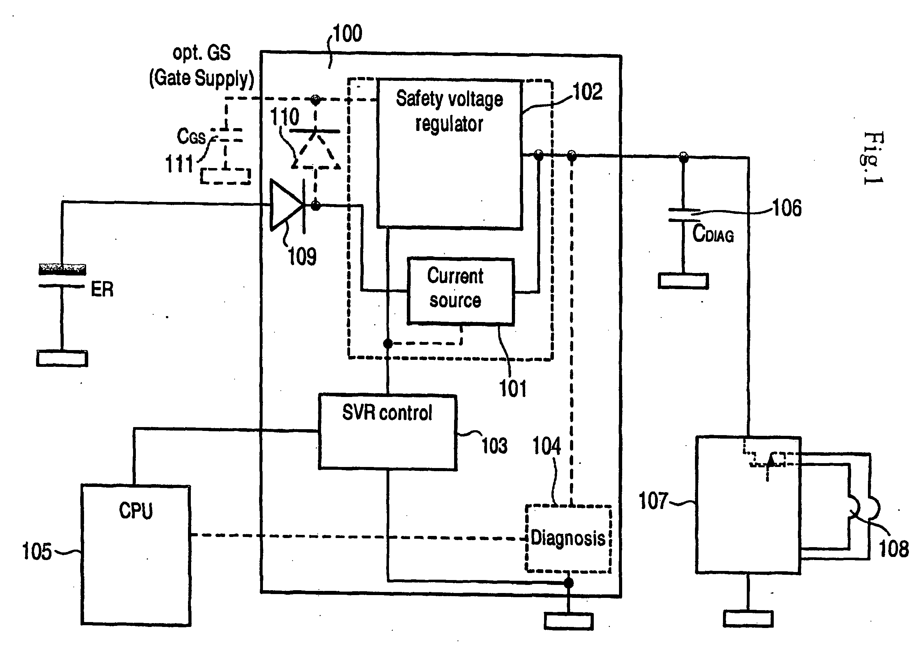

Es zeigen Figur 1 ein Blockschaltbild der erfindungsgemäßen Vorrichtung.

### Beschreibung

Zündelemente für Airbags werden üblicherweise ausschließlich aus einem Energiereservekondensator bestromt, um gezündet zu werden. Die Spannung des Energiereservekondensators muss dabei so dimensioniert werden, dass eine vorgegebene Selbstversorgungszeit des Steuergeräts nach der Trennung vom Bordnetz eingehalten wird und dass der durch den Innenwiderstand des Energiereservekondensators verursachte Spannungseinbruch während der Zündung das Steuergerät in seiner Funktion nicht beeinflusst. Im Stand der Technik ist es bekannt, dass zur Kompensation des Spannungsabfalls an Innenwiderstand des Energiereservekondensators eine wesentlich höhere Energiereservespannung aufgebaut wird, als sie für den Betrieb notwendig wäre.

Erfindungsgemäß wird daher vorgeschlagen, einen Spannungsregler zwischen der Energiereserve und der Zündendstufe vorzusehen, um die Spannung an der Zündendstufe immer auf den niedrigst möglichen Wert einzustellen, um die Verlustleistung, die durch diese Spannung an den Zündendstufen hervorgerufen wird, zu minimieren.

Figur 1 zeigt in einem Blockschaltbild die erfindungsgemäße Vorrichtung.

Eine Energiereserve ER ist auf einer Seite gegen Masse geschaltet und auf der anderen Seite mit einem Baustein 100 verbunden. Dieser Baustein 100 ist auch mit einem Mirkocontroller 105, mit Masse und schließlich mit einem Diagnosekondensator 106 und einer Zündkreisansteuerung 107 verbunden. Der Diagnosekondensator 106 stellt die für die Zündendstufentests benötigte Energie zur Verfügung. Die Zündkreisansteuerung 107 weist die Zündendstufen für die einzelnen Zündelemente 108 auf. Dabei ist zwischen Masse und den Zündelementen 108 jeweils eine Minusendstufe geschaltet und zwischen dem Baustein 100 und dem Zündelement 108 eine oder mehrere Plusendstufen. Diese Endstufen werden im Auslösefall über eine Leitung, üblicherweise eine SPI-Leitung vom Mikrocontroller 105 durchgeschaltet, so dass der Zündstrom durch die Zündendstufen fließen kann. Der Zündstrom kommt von der Energiereserve ER. Der Zündstrom muss jedoch zunächst über eine Verpolschutzdiode 109 und den Sicherheitshalbleiter 102 fließen, um zu den Zündendstufen in der Zündkreisansteuerung 107 zu gelangen. Der Sicherheitshalbleiter 102 wird durch einen Kontrollbaustein 103, der sich auch auf dem ASIC 100 befindet, angesteuert. Der Baustein 103 steuert typischerweise das Gate des Leistungstransistors an, um die zwei Hauptfunktionen (Sicherheitshalbleiter, Spannungsregler) des Bausteins 100 zu gewährleisten. Dazu ist der Baustein 103 mit dem Mikrocontroller 105, der den Sicherheitshalbleiter-Zustand (ein oder aus) kontrolliert, verbunden und auch aus elektrischen Gründen mit Masse. Auf dem Baustein 100 ist auch ein Diagnosebaustein 104, der beispielsweise eine einschaltbare Widerstandslast nach Masse sein könnte, vorgesehen. Dafür ist der Diagnosebaustein 104 ebenfalls mit dem Mikrocontroller 105 verbunden. Parallel zum Sicherheitshalbleiter 102, in dem sich auch der Spannungsregler befindet, ist eine Stromquelle 101 vorgesehen, die über den Diagnosekondensator 106 die Diagnoseenergie für die Zündendstufe 107 bereitstellt. Der Baustein 100 ist, wie oben dargestellt, über einen Ausgang mit einem Diagnosekondensator 106 und Zündkreisansteuerung 107 verbunde die beide jeweils gegen Masse geschaltet sind. Der Diagnosekondensator 106 stellt die für die Endstufediagnose benötigte Energie bereit. Die Zündkreisansteuerung 107 ist mit Zündelementen 108 beschaltet, die über Zündendstufen mit dem Zündstrom aus der Energiereserve ER bestromt werden. Die optionale Gate-Versorgung mit Diode 110 und Kondensator 111 stellt eine gedämpfte Energiereserve-Spannung dar, so dass während eines Energiereserve-Spannungsabfalls eine höhere Spannung für die Gate-Ansteuerung des Transistors zur Verfügung steht. Damit kann bei einem Abfall der Energiereserve bis zu einer Spannung kleiner als die geregelte Spannung (Durchschalten des Leistungstransistors) ein geringerer Innenwiderstand (R_{DS(ON)}) des Transistors erreicht werden.

## Patentansprüche

1. Vorrichtung zur Bestromung wenigstens einer Zündendstufe, mittels eines Zündstroms aus einer Energiereserve (ER), wobei ein Spannungsregler zwischen der Energiereserve (ER) und der wenigstens einen Zündendstufe derart
geschaltet ist, dass der Spannungsregler eine Spannung an der wenigstens einen Zündendstufe auf einen vorgegebenen Wert einstellt, wobei der Spannungsregler abschaltbar ist und die Funktion eines Sicherheitshalbleiters darstellt, wobei der Sicherheitshalbleiter ein separates, von den Zündendstufen unabhängige Bauelement ist, das in einem eingeschalteten Zustand die Bestromung der wenigstens einen Zündendstufe ermöglicht oder in einem ausgeschalteten Zustand die Bestromung nicht ermöglicht
und wobei der Sicherheitshalbleiter in Abhängigkeit von einem externen Mikrocontroller-Signal die Bestromung der wenigstens einen Zündendstufe ermöglicht, **dadurch gekennzeichnet, dass** zwischen der Energiereserve (ER) und dem Spannungsregler eine Verpolschutzdiode (109) vorgesehen ist, und dass der Sicherheitshalbleiter (102) wenigstens einen MOSFET-Leistungstransistor aufweist.

2. Vorrichtung nach Anspruch 1, **dadurch gekennzeichnet, dass** eine Diagnose (104) für den Sicherheitshalbleiter vorgesehen ist.

3. Vorrichtung nach Anspruch 2, **dadurch gekennzeichnet, dass** dem Spannungsregler wenigstens eine Stromquelle (101) zur Diagnose der wenigstens einen Zündendstufe zugeordnet ist.

## Claims

1. Device for supplying current to at least one ignition power module by means of an ignition current from an energy reserve (ER), a voltage regulator being connected between the energy reserve (ER) and the at least one ignition power module in such a way that the voltage regulator sets a voltage to a predetermined value at the at least one ignition power module, the voltage regulator being able to be switched off and representing the function of a safety semiconductor, the safety semiconductor being a separate component that is independent of the ignition power modules, said safety semiconductor, in a switched-on state, allowing the current feed of the at least one ignition power module or, in a switched-off state, not allowing the current feed, and the safety semiconductor, depending on an external microcontroller signal, allowing the current feed of the at least one ignition power module, **characterized in that** a reverse polarity protection diode (109) is provided between the energy reserve (ER) and the voltage regulator, and **in that** the safety semiconductor (102) has at least one MOSFET power transistor.

2. Device according to Claim 1, **characterized in that** a diagnosis (104) is provided for the safety semiconductor.

3. Device according to Claim 2, **characterized in that** at least one current source (101) is assigned to the voltage regulator for the diagnosis of the at least one ignition power module.

## Revendications

1. Dispositif pour l'alimentation en courant d'au moins un étage de sortie d'allumage, au moyen d'un courant d'allumage provenant d'une réserve d'énergie (ER), un régulateur de tension étant connecté entre la réserve d'énergie (ER) et l'au moins un étage de sortie d'allumage de telle sorte que le régulateur de tension règle une tension au niveau de l'au moins un étage de sortie d'allumage à une valeur prédéterminée, le régulateur de tension pouvant être désactivé et représente la fonction d'un semi-conducteur de sécurité, le semi-conducteur de sécurité étant un composant distinct indépendant des étages de sortie d'allumage qui, dans un état connecté, permet l'alimentation en courant de l'au moins un étage de sortie d'allumage ou qui, dans un état déconnecté, ne permet pas l'alimentation en courant, et le semi-conducteur de sécurité, en fonction d'un signal de microcontrôleur externe, permettant l'alimentation en courant de l'au moins un étage de sortie d'allumage, **caractérisé en ce qu'**une diode de protection contre l'inversion de polarité (109) est prévue entre la réserve d'énergie (ER) et le régulateur de tension, et **en ce que** le semi-conducteur de sécurité (102) comprend au moins un transistor de puissance MOSFET.

2. Dispositif selon la revendication 1, **caractérisé en ce qu'**on prévoit un diagnostic (104) pour le semi-conducteur de sécurité.

3. Dispositif selon la revendication 2, **caractérisé en ce qu'**on associe au régulateur de tension au moins une source de courant (101) pour le diagnostic de l'au moins un étage de sortie d'allumage.
